# EUROPÄISCHE PATENTSCHRIFT

(11) **EP 2 268 943 B1**
(45) Veröffentlichungstag und Bekanntmachung des Hinweises auf die Patenterteilung: **04.07.2012**
(21) Anmeldenummer: 09730778.9
(22) Anmeldetag: 02.04.2009
(51) Int. Cl.: F16H 57/04

(54) **KÜHLANORDNUNG FÜR EIN GETRIEBE, GETRIEBE UND ANTRIEB**
COOLING ARRANGEMENT FOR A TRANSMISSION, TRANSMISSION, AND DRIVE
AGENCEMENT DE REFROIDISSEMENT POUR UNE TRANSMISSION, TRANSMISSION ET MÉCANISME D'ENTRAÎNEMENT

(30) Priorität: 07.04.2008 DE 102008017755
(43) Veröffentlichungstag der Anmeldung: 05.01.2011
(73) Patentinhaber: SEW-EURODRIVE GmbH & Co. KG, 76646 Bruchsal (DE)
(72) Erfinder: SAAR, Steffen, 67376 Harthausen (DE); MAIBERGER, Markus, 56290 Lütz (DE)
(86) Internationale Anmeldenummer: PCT/EP2009/002403
(87) Internationale Veröffentlichungsnummer: WO 2009/124687

(56) Entgegenhaltungen:
- WO-A-2007/124885
- DE-A1-102005 031 197
- DE-A1-102005 052 675
- DE-U1- 20 302 784
- GB-A- 739 854

## Beschreibung

Die Erfindung betrifft ein Getriebe mit Kühlanordung und einen Antrieb. So ein Getriebe ist aus der GB 739854A bekannt.

Bei industriell eingesetzten Getrieben ist es bekannt, Lagerdeckel zum Schutz von Lagern, die zur Lagerung von Wellen des Getriebes vorgesehen sind, anzubringen. Die Lagerdeckel werden an einem Gehäuseteil des Getriebes schraubverbunden und abgedichtet.

Der Erfindung liegt daher die Aufgabe zugrunde, eine möglichst große Antriebsleistung pro Volumen zu erreichen.

Erfindungsgemäß wird die Aufgabe bei dem Getriebe mit Kühlanordnung nach den in Anspruch 1, und bei dem Antrieb nach den in Anspruch 11 angegebenen Merkmalen gelöst.

Von Vorteil ist dabei, dass die Wärme, welche im Lager an einer Welle erzeugt wird, möglichst direkt an einen Kohlkörper abgeführt wird. Wenn die Welle schnell drehend ist, wie zum Beispiel eine eintreibende Welle kann die erzeugte Wärme erheblich sein. Ein auf der Welle mitdrehend befestigter passiver Lüfter weist dann aber eine entsprechend hohe Drehzahl und somit auch eine entsprechend hohe Kühlleistung auf. Somit ist im zugehörigen das Getriebe umfassenden Antrieb eine möglichst große Antriebsleistung pro Volumen erreichbar.

Der erfindungsgemäße Lagerdeckel ist zumindest gehäusebildend für das Lager. Es ist aber auch vorteilhaft, wenn der Lagerdeckel den Außenring aufnimmt, mit diesem kraftschlüssig oder formschlüssig verbunden ist und somit anfallende Drehmomente ableitet an das weitere Gehäuse des Getriebes.

Gemäß der Erfindung sind das Lager und der Kühlkörper in einem gemeinsamen axialen Bereich der Welle angeordnet. Von Vorteil ist dabei, dass die Wärme nur in radialer Richtung, also im optimalen Fall nur durch die Wand des Lagerdeckels hindurch, geleitet werden muss. Somit ist nur ein geringer Wärmeübergangswiderstand zwischen Außenring des Lagers und Kühlkörper vorhanden und die Wärme wird effektiv an die Umgebung ableitbar. Insbesondere gilt dies für topfförmig oder zylinderstumpfförmig herausragende Lagerdeckel.

Bei einer vorteilhaften Ausgestaltung nimmt der Lagerdeckel den Außenring des Lagers auf, insbesondere zur reibungsbedingt entstehenden Drehmomentableitung, und der Lagerdeckel mit einem weiteren Gehäuseteil des Getriebes verbunden ist. Von Vorteil ist dabei, dass der Lagerdeckel drei Funktionen in einem Teil realisiert: erstens gehäusebildenden Schutz. zweitens mechanisches Halten des Lagers und drittens Warmeableitung.

Bei einer vorteilhaften Ausgestaltung ist das erste Gehäuseteil ein Lagerdeckel, insbesondere ein zur Umgebung hin topfförmig oder zylinderstumpfförmig aus dem eigentlichen Getriebegehäuse herausstehender Lagerdeckel. Von Vorteil ist dabei, dass als eigentliches Getriebegehäuse ein einfacher im Wesentlichen quaderförmiger Stahl-Gusskörper verwendbar ist, in welchen Ausnehmungen für Wellen eingebracht sind. Der Lagerdeckel ist nun auf diesen Gusskörper aufsetzbar, insbesondere schraubverbindbar. Somit ist es ermöglicht, dass der Lagerdeckel herausragt aus der Seitenfläche des Gusskörpers. Bei stark ausgeprägtem Herausragen ist ein zylinderförmiges oder topfförmiges Herausragen vorteilhaft. Alternativ ist bei einer Winkelgetriebestufe das kegelförmige Verzahnungsteil, Insbesondere eintreibende Kegelritzel umgebbar mit einem topfförmigen Lagerdeckel, in welchem auch zumindest ein Lager für die eintreibende, mit dem Kegelritzel verbundene Welle vorgesehen ist. Somit ist der Lagerdeckel dann sogar zusätzlich gehäusebildend für das Kegelritzel, während das im Eingriff stehende Kegelrad im Inneren des eigentlichen Getriebegehäuses aufgenommen und gehäusebildend von diesem umgeben ist. Das eigentliche Getriebegehäuse ist dabei zur Ableitung der hohen Drehmomente der abtreibenden Welle ausgelegt. Der Lagerdeckel muss hingegen nur die einfriebsseitigen, also kleinen Drehmomente ableiten, beispielsweise des antreibenden Elektromotors.

Bei einer vorteilhaften Ausgestaltung weist der Kühlkörper eine oberflächenvergrößernde Struktur auf, insbesondere ist er einstückig ausgebildet. Von Vorteil ist dabei, dass die Herstellung einfach ist und kein weiterer Wärmeübergang zwischen zwei Teilbereichen des Kühlkörpers herzustellen ist. Insbesondere ist die Struktur mit einer hohen Symmetrie ausstattbar, um eine isotrope Wärmeableitung zu ermöglichen. Wenn beispielsweise eine zumindest diskrete Rotationssymmetrie vorgesehen ist, ist die Wärmeableitung unabhängig von der entsprechenden Drehlage des Getriebes im Wesentlichen gleich gut ableitbar.

Bei einer vorteilhaften Ausgestaltung umfasst der Kühlkörper einen Grundkörper, in den Fächer oder Rippen verbunden sind, insbesondere radial sich erstreckende. Von Vorteil ist dabei, dass eine hohe Zahl von Fächern oder Rippen verbindbar ist uns somit eine sehr große Oberfläche in einfacher Weise und mit einer geringen Anzahl an Sorten von Teilen errejchbar ist.

Bei einer vorteilhaften Ausgestaltung ist ein Lüfterrad mit der Welle verbunden. Von Vorteil ist dabei, dass bei hoher Drehzahl ein starker Luftstrom erzeugbar ist, der somit zu einer großen Kühlleistung führt, wenn auch eine hohe Verlustleistung auftritt. Bei kleinen Drehzahlen ist der Luftstrom gering, jedoch ist dann auch die Verlustleistung gering. Außerdem verbessert das Lüfterrad den Gleichlauf der Welle, indem das Trägheitsmoment erhöht wird.

Bei einer vorteilhaften Ausgestaltung weist das Lüfterrad einen Grundkörper und Lüfterflügel auf, insbesondere wobei am äußeren Umfang des Lüfterrads ein Verbindungsring und/oder ein Luftleitring vorgesehen ist. Von Vorteil ist dabei, dass die Führung des Luftstromes verbessert ist und somit auch der Wirkungsgrad der Kühlanordnung.

Bei einer vorteilhaften Ausgestaltung ist das Lüfterrad formschlüssig, insbesondere mittels Passfederverbindung, mit der Welle verbunden. Von Vorteil ist dabei, dass eine leistungsfähige sichere Verbindung verwendbar ist.

Bei einer vorteilhaften Ausgestaltung ist die Welle eine eintreibende Welle des Getriebes. Von Vorteil ist dabei, dass der Lüfter wegen der hohen Drehzahl, insbesondere der am Getriebe auftretenden höchsten Drehzahl, auch einen starken Luftstrom erzeugt.

Bei einer vorteilhaften Ausgestaltung ist der Lüfter als Axiallüfter ausgebildet und somit der Kühlkörper in besonders effektiver Weise angeströmt.

Bei einer vorteilhaften Ausgestaltung ist die eintreibende Getriebestufe eine Winkelgetriebestufe, insbesondere mit topfförmig oder zylinderstumpfförmig herausragendem Lagerdeckel. Von Vorteil ist dabei, dass kein zusätzlicher Bauraum für eine zweckdienliche spezielle Ausformung des Lagerdeckels zur Aufnahme des Kühlkörpers notwendig ist sondern der Lagerdeckel in platzsparender Weise die Winkelgetriebestufe gehäusebildend umgibt und trotzdem eine Aufnahmemöglichkeit für den Kühlkörper vorsehbar ist.

Wichtige Merkmale bei dem Getriebe sind, dass es mit einer vorbeschriebenen Kühlanordnung ausgeführt ist. Somit ist vorteiligerweise eine schnell drehende eintreibende Welle kühlbar. Insbesondere ist somit die Wärmeproduktion des gesamten Getriebes verringert und somit die durchleitbare Leistung pro Bauvolumen des Getriebes erhöht. Ein einen Elektromotor umfassender Antrieb weist also einen erhöhten Wirkungsgrad auf. Insbesondere ist der Kühlkörper an der Außenseite eines Lagerdeckels anbringbar, an dessen Innenseite ein Lager mit zugeordnetem Wellendichtring angeordnet ist. Somit ist der von diesen Bauteilen bei hoher Drehzahl erzeugte Wärmestrom über den Kühlkörper auf kurzem Wege ableitbar an die Umgebung.

Wichtige Merkmale bei dem Antrieb sind, dass er ein von einem Elektromotor angetriebenes Getriebe umfasst das eine vorbeschriebene Kühlanordnung aufweist. Von Vorteil ist dabei, dass insgesamt eine hohe Leistung pro Volumen des zugehörigen Antriebs erzeugbar ist.

Weitere Vorteile ergeben sich aus den Unteransprüchen.

### Bezugszeichenliste

- 1: Kohlrippe
- 2: Grundkörper
- 20: eintreibende Welle
- 21: Gehäuse
- 22: Lagerdeckel
- 23: Lagerdeckel
- 24: topfförmiger Lagerdeckel
- 30: Grundkörper
- 31: Lüfterflügel
- 32: Verbindungsring
- 33: Abdeckhaube
- 50: Kühtrippen
- 60: Luftleitring

Die Erfindung wird nun anhand von Abbildungen näher erläutert:

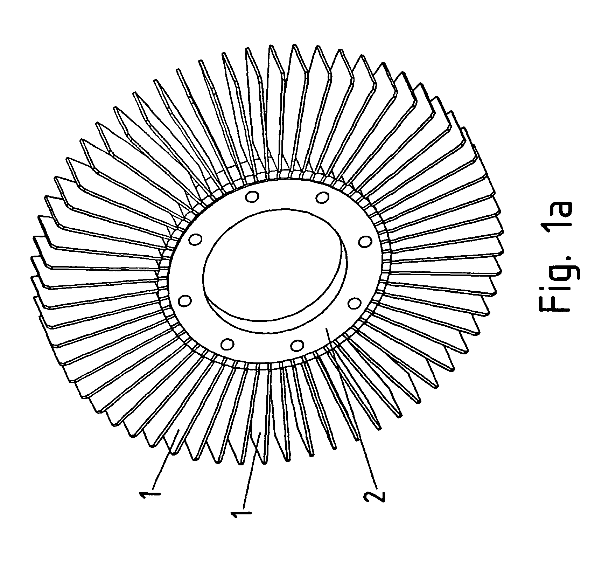

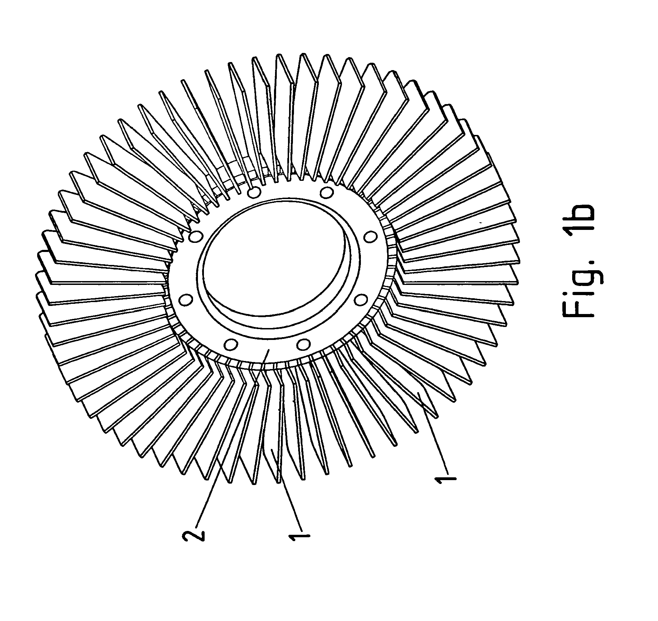

In der Figur 1a ist eine Schrägansicht auf eine erfindungsgemäße Kühlvorrichtung gezeigt. In Figur 1b ist eine Schrägansicht mit anderer Blickrichtung gezeigt. Dabei sind sich radial erstreckende Kühlrippen 1 als oberflächenvergrößernde Struktur mit einem Grundkörper 2 verbunden, welcher zur Verbindung mit einem Lagerdeckel des Getriebes vorgesehen ist. Die Rippen 1 sind flügelähnlich ausgeformt und wie Fächer in den Grundkörper 2 eingesteckt und kraftschlüssig, stoffschlüssig und/oder formschlüssig mit diesem verbunden. Alternativ sind auch einstückige Ausführungen des Kühlkörpers vorteilhaft verwendbar.

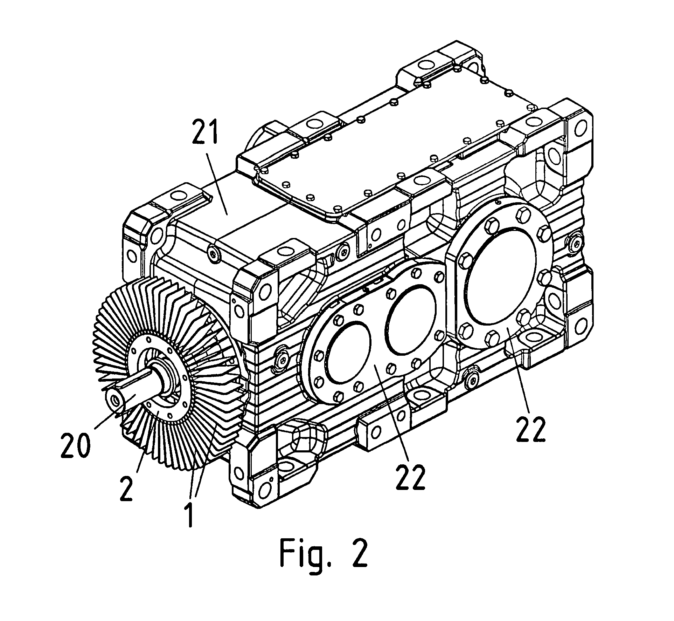

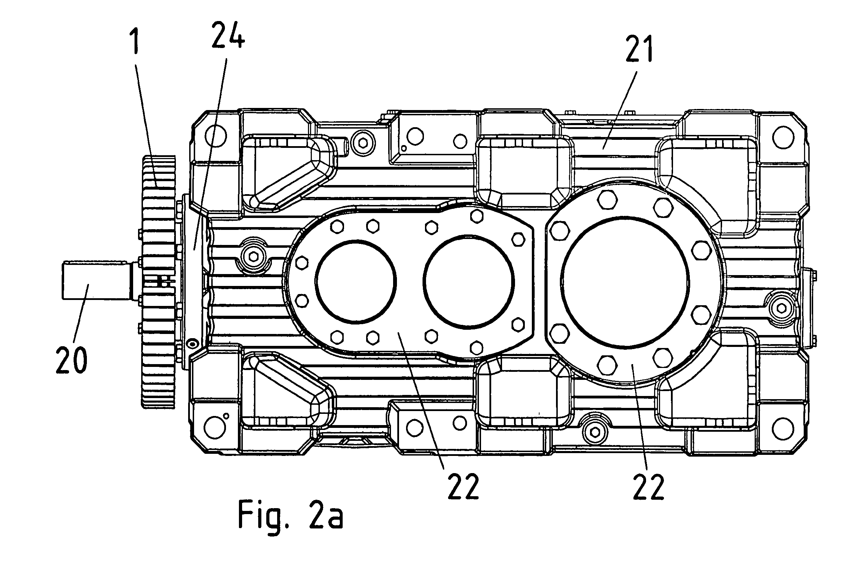

In Figur 2 ist ein erfindungsgemäßes Getriebe in Schrägansicht gezeigt, welches ein Gehäuse 21 aufweist, mit dem Lagerabdeckungen und Lagerdeckel (22, 23) schraubverbunden und dicht verbunden sind. Die eintreibende Welle 20 ist über ein Lager im Gehäuse gelagert, wobei der Außenring des Lagers im topfförmigen Lagerdeckel 24 gehalten ist und dieser mit dem Gehäuse 21 schraubverbunden ist. Das topfförmige Herausragen des Lagerdeckels 24 ermöglicht eine einfache kraftschlüssige Verbindung des ringförmigen Grundkörpers 2, also beispielsweise ein Aufstecken auf den herausragenden topfförmigen Teil des Lagerdeckels.

Alternativ sind auch stoffschlüssiges Verbinden des Grundkörpers 2 mit dem Lagerdeckel 24, wie Schweißverbinden oder Klebeverbinden, oder auch ein formschlüssiges Verbinden vorsehbar.

Bei einem weiteren erfindungsgemäßen Ausführungsbeispiel der Verbindung ist auch Wärmeleitpaste in den Verbindungsbereich einbringbar und somit der Wärmeübergangswiderstand reduzierbar.

Bei einem weiteren erfindungsgemäßen Ausführungsbeispiel ist auch ein anders geformter Lagerdeckel verwendbar, an den dann ein geeignet geformter Grundkörper verbunden wird zur Wärmeabfuhr, wobei am Grundkörper wiederum oberflächenvergrößernde Strukturen, wie Kühlrippen, Kühlfinger, Erhebungen und/oder wellenförmige Oberflächenverläufe vorgesehen sind.

In der Figur 2 ist die eintreibende Getriebestufe eine Winkelgetriebestufe. Bevorzugt ist hier eine Kegelgetriebestufe verwendet, bei der ein topfförmiger Lagerdeckel gehäusebildend ist.

In der Figur 2a ist eine zur Figur 2 gehörige Seitenansicht gezeigt.

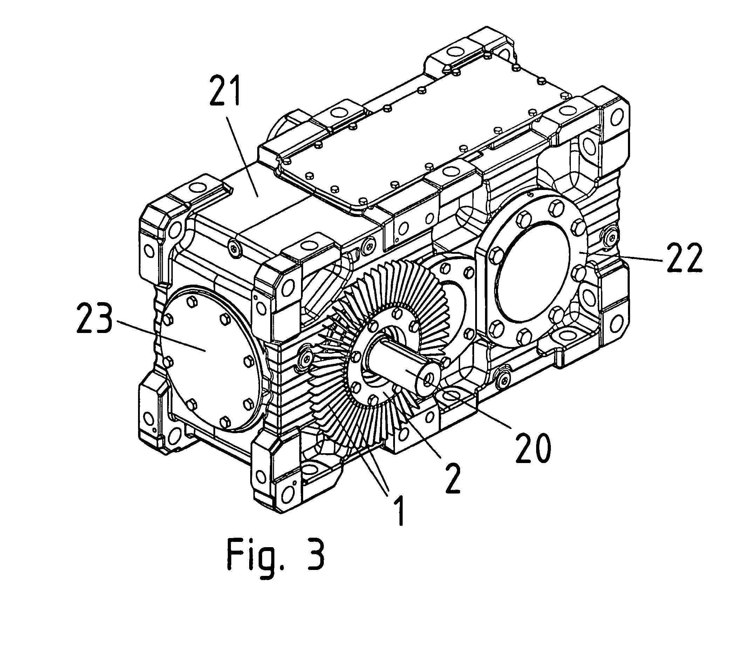

In der Figur 3 ist ein weiteres erfindungsgemäßes Getriebe in Schrägansicht gezeigt. Hierbei handelt es sich um ein Stirnradgetriebe, dessen der eintreibenden Welle 20 zugeordneter Lagerdeckel nicht topfförmig oder zylinderstumpfförmig ist. In diesem Fall ist der Grundkörper 2 mit dem Lagerdeckel formschlüssig verbunden, insbesondere schraubverbunden. Die Kontaktfläche ist hierbei vorzugsweise eben, wobei die eintreibende Welle in Richtung der Normale dieser Ebene weist.

In der Figur 4 ist ein weiteres erfindungsgemäßes Getriebe in Schrägansicht gezeigt, wobei in Figur 4a eine zugehörige Seitenansicht gezeigt ist.

Hierbei ist zusätzlich zu dem nach Figur 2 ausgebildeten Getriebe ein auf der Welle 20 vorgesehener mitdrehender Lüfter vorhanden. Dieser weist einen Grundkörper 30 auf, an dem Lüfterflügel 31 angebracht sind, deren äußere Enden zur Stabilisierung mit einem Verbindungsring 32 verbunden sind. Dieser Verbindungsring leitet in geringem Umfang auch die von den Lüfterflügeln angetriebene Luft in Richtung auf den Kühlkörper. Zum Schutz ist eine den Lüfter umgebende Abdeckhaube 33 vorgesehen.

Der Lüfter ist mit der Welle verbunden und mitdrehend. Somit wird der von den Lüfterflügeln 31 angetriebene Kühlluftstrom stärker, wenn die Drehzahl höher ist. Gleichzeitig steigt aber mit der Drehzahl auch die Verlustwärmeerzeugung im Getriebe. Auf diese Weise ist eine sehr sparsame Weise zur Entwärmung erreicht. Das Trägheitsmoment der eintreibenden Welle wird mittels des Lüfters etwas erhöht und somit Drehzahlschwankungen entgegengewirkt. Insbesondere bei Antrieben, die einen umrichtergespeisten Elektromotor aufweisen, ist somit eine bessere Gleichlaufgüte erreichbar.

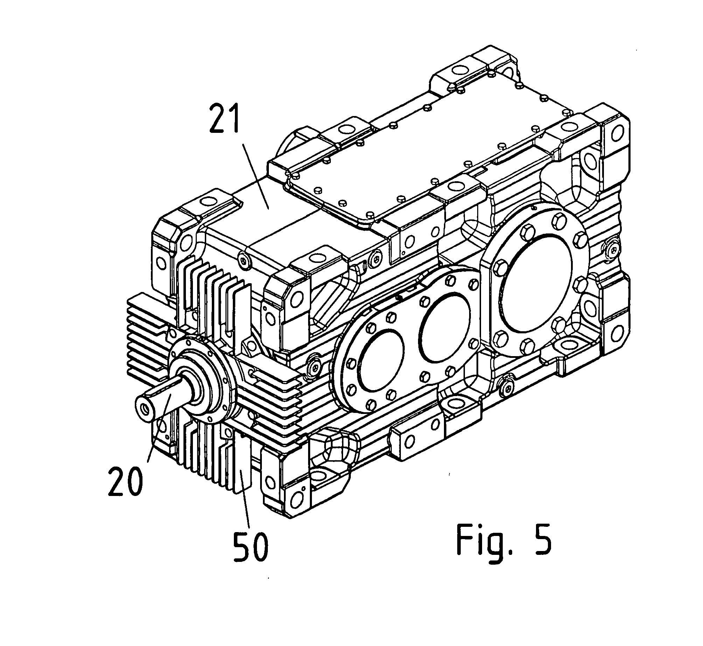

In der Figur 5 ist ein weiteres erfindungsgemäßes Getriebe In Schrägansicht gezeigt. Hierbei erstrecken sich die Kühlrippen 50 nicht radial sondern der Kühlkörper ist mit rechtwinklig zueinander ausgerichtet veriaufenden Kühlrippen versehen. Alternativ sind aber auch anders gerichtete Kühlrippen oder oberflächenvergrößernde Strukturen am Kühlkörper ausbildbar. Wichtig ist hierbei, dass der Kühlkörper einstückig ausgebildet ist und direkt mit dem topfförmigen Lagerdeckel verbunden ist.

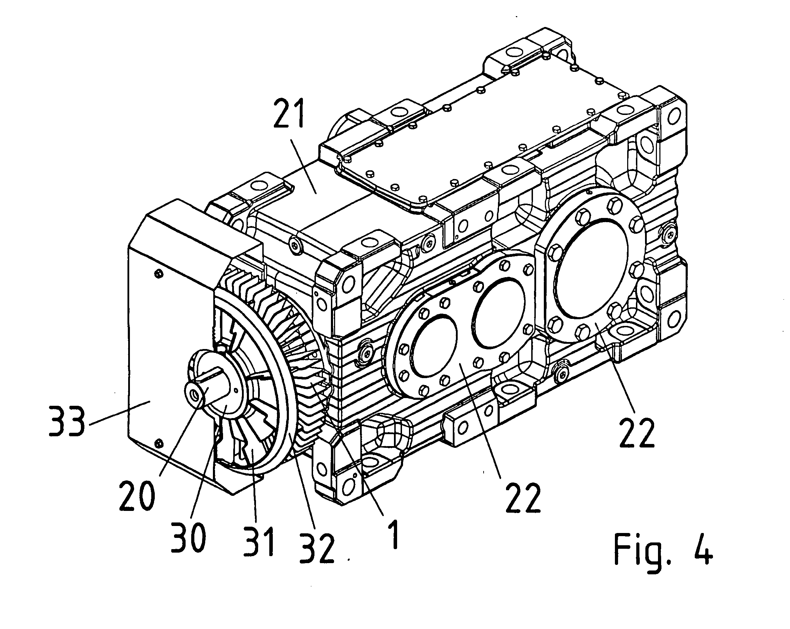

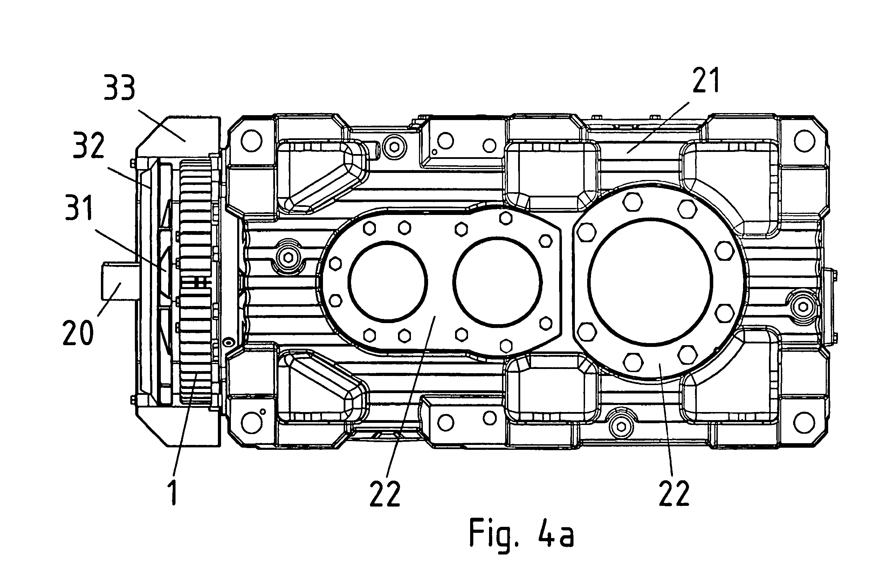

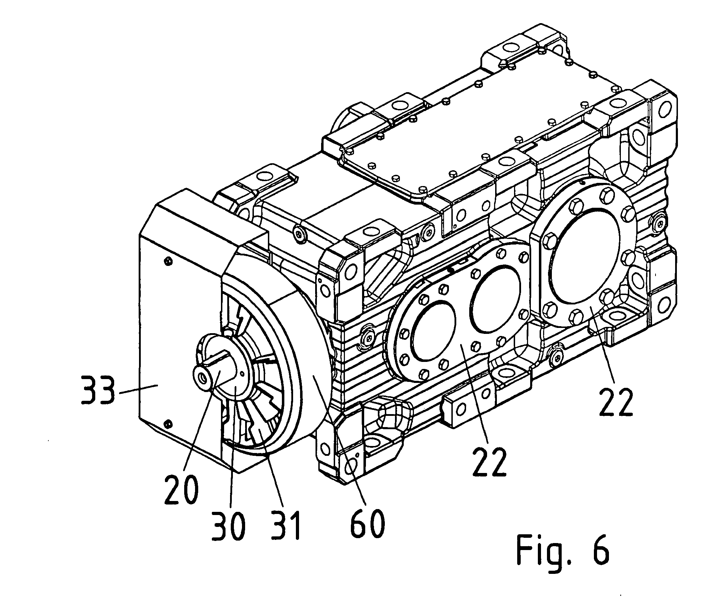

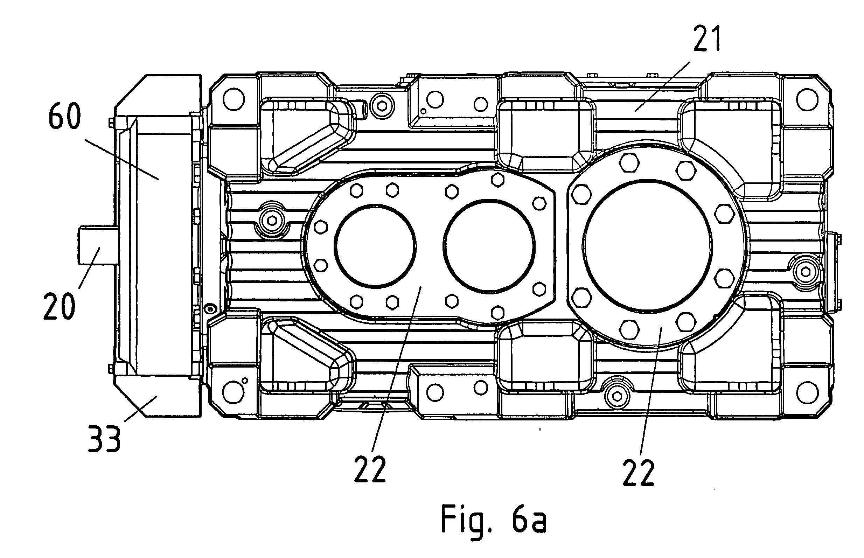

In der Figur 6 ist ein weiteres erfindungsgemäßes Getriebe in Schrägansicht gezeigt, wobei in Figur 6a eine zugehörige Seitenansicht gezeigt ist. Zusätzlich zu den in Figur 4 gezeigten Teilen des Getriebes ist bei diesem erfindungsgemäßen Ausführungsbeispiel ein Luftleitring 60 gezeigt, der die Luftströmung besser in axiale Richtung auf den Kühlkörper hin lenkt. Somit ist eine verbesserte Effizienz der Kühlung erreicht. Vorzugsweise ist der Luftleitring 60 mitdrehend am Lüfter oder an der Welle 20 befestigt. Alternativ wäre auch eine Befestigung am Gehäuse ausführbar, um das Trägheitsmoment zu verringern.

Der Kühlkörper ist als Blechteil oder als Gussteil ausbildbar, insbesondere aus Stahl oder aus Aluminium. In einem anderen erfindungsgemäßen Ausführungsbeispiel ist der Kühlkörper mit dem Lagerdeckel einstückig ausbildbar.

Vorzugsweise ist der Kühlkörper und der Lagerdeckel derart ausgebildet, dass der Kühlkörper in mehreren Baugrößen einer Getriebebaureihe verwendbar ist, also eine entsprechende Schnittstelle vorgesehen ist.

## Patentansprüche

1. Getriebe mit Kühlanordnung.
wobei ein Lagerdeckel (24) für ein Lager einer Welle (20) zumindest teilweise gehäusebildend ist,
wobei an einer der Umgebung zugewandten Seite des Lagerdeckels (24) ein Kühlkörper vorgesehen ist.
insbesondere zur Ableitung der vom Lager und von einem gegebenenfalls zugeordneten Wellendichtring erzeugten Wärme in das umgebende Medium, insbesondere Luft,
wobei ein axialer Bereich der Welle sowohl vom Lager als auch vom Kühlkörper überdeckt ist,
wobei der Lagerdeckel den Außenring des Lagers aufnimmt zur Aufnahme der reibungsbedingt entstehenden Drehmomentableitung und der Lagerdeckel mit einem weiteren Gehäuseteil des Getriebes verbunden ist, **dadurch gekennzeichnet, daß**
- (i) der Kühlkörper einen Grundkörper (2) aufweist, mit dem radial sich erstreckende Rippen (1) verbunden sind,
wobei der Grundkörper auf den topfförmig aus dem Gehäuseteil herausragenden Teil der Lagerdeckels aufgesteckt und mit dem Lagerdeckel kraftschlüssig, formschlüssig oder stoffschlüssig verbunden ist,
wobei die Rippen (1) flügelähnlich ausgeformt sind und wie Fächer in den Grundkörper (2) eingesteckt und kraftschlüssig, stoffschlüssig und/oder formschlüssig mit diesem verbunden sind,
- (ii) oder wobei der Lagerdeckel einen geeignet geformten Grundkörper aufweist, an dem zur Wärmeabfuhr am Grundkörper wiederum oberflächenvergrößernde Strukturen, wie Kühlrippen, Kühlfinger, Erhebungen und/oder wellenförmige Oberflächenverläufe, vorgesehen sind.

2. Getriebe mit Kühlanordnung nach mindestens einem der vorangegangenen Ansprüche,
**dadurch gekennzeichnet, dass**
das erste Gehäuseteil ein Lagerdeckel ist, insbesondere ein zur Umgebung hin topfförmig oder zylinderstumpfförmig herausstehender Lagerdeckel.

3. Getriebe mit Kühlanordnung nach mindestens einem der vorangegangenen Ansprüche,
**dadurch gekennzeichnet, dass**
der Kühlkörper eine oberflächenvergrößernde Struktur aufweist, insbesondere einstückig ausgebildet ist.

4. Getriebe mit Kühlanordnung nach mindestens einem der vorangegangenen Ansprüche,
**dadurch gekennzeichnet, dass**
ein Lüfterrad mit der Welle verbunden ist, insbesondere zur Bildung eines Axiallüfters oder Radiallüfters, insbesondere das Lüfterrad als Radiallüfterrad oder als Axiallüfterrad ausgebildet ist.

5. Getriebe mit Kühlanordnung nach mindestens einem der vorangegangenen Ansprüche,
**dadurch gekennzeichnet, dass**
die Fächer oder Rippen Luftleitflächen bilden, insbesondere zur Reduzierung von Turbulenz und/oder Drall, insbesondere für den Axiallüfter oder Radiallüfter.

6. Getriebe mit Kühlanordnung nach mindestens einem der vorangegangenen Ansprüche,
**dadurch gekennzeichnet, dass**
das Lüfterrad einen Grundkörper und Lüfterflügel aufweist, insbesondere wobei am äußeren Umfang des Lüfterrads ein Verbindungsring und/oder ein Luftleitring vorgesehen ist.

7. Getriebe mit Kühlanordnung nach mindestens einem der vorangegangenen Ansprüche,
**dadurch gekennzeichnet, dass**
das Lüfterrad formschlüssig, insbesondere mittels Passfederverbindung, mit der Welle verbunden ist.

8. Getriebe mit Kühlanordnung nach mindestens einem der vorangegangenen Ansprüche,
**dadurch gekennzeichnet, dass**
die Welle eine eintreibende Welle des Getriebes ist.

9. Getriebe mit Kühlanordnung nach mindestens einem der vorangegangenen Ansprüche,
**dadurch gekennzeichnet, dass**
die eintreibende Getriebestufe eine Winkelgetriebestufe ist, insbesondere mit topfförmig oder zylinderstumpfförmig herausragendem Lagerdeckel.

10. Getriebe mit Kühlanordnung nach mindestens einem der vorangegangenen Ansprüche,
**dadurch gekennzeichnet, dass**
der Lüfter gekapselt vorgesehen ist, insbesondere ein Luftumlenkblech zum Umlenken der Luft in axiale Richtung vorgesehen ist.

11. Antrieb, umfassend ein von einem Elektromotor angetriebenes Getriebe, das eine Kühlanordnung nach mindestens einem der vorangegangenen Ansprüche aufweist.

## Claims

1. A transmission with cooling arrangement,
wherein a bearing cover (24) for a bearing of a shaft (20) is at least partially housing-forming,
wherein a cooling body is provided on a side of the bearing cover (24) which faces the environment,
in particular for dissipating the heat generated by the bearing and by an optionally associated shaft seal into the surrounding medium, in particular air,
wherein an axial region of the shaft is covered both by the bearing and by the cooling body,
wherein the bearing cover receives the outer ring of the bearing for absorbing the torque dissipation which occurs due to friction, and the bearing cover being connected to a further housing part of the transmission, **characterised in that**
- (i) the cooling body has a base body (2) to which radially-extending ribs (1) are connected,
the base body being placed on the part of the bearing cover which projects out of the housing part in a pot-shape and being connected to the bearing cover in a non-positive, positive or material lock,
the ribs (1) being formed similarly to wings and being inserted in the manner of fan formations into the base body (2), and being connected thereto in a non-positive lock, material lock and/or positive lock,
- (ii) or the bearing cover having a suitably formed base body on which for dissipating heat again surface-enlarging structures, such as cooling ribs, cooling fingers, raised sections and/or corrugated surface formations are provided on the base body.

2. A transmission with cooling arrangement according to at least one of the preceding claims, **characterised in that** the first housing part is a bearing cover, in particular a bearing cover which projects towards the surroundings in a pot-shape or cylinder-stub-shape.

3. A transmission with cooling arrangement according to at least one of the preceding claims, **characterised in that** the cooling body has a surface-enlarging structure, in particular is formed in one piece.

4. A transmission with cooling arrangement according to at least one of the preceding claims, **characterised in that** a fan wheel is connected to the shaft, in particular for forming an axial fan or radial fan, in particular the fan wheel is formed as a radial fan wheel or as an axial fan wheel.

5. A transmission with cooling arrangement according to at least one of the preceding claims, **characterised in that** the fan formations or ribs form air guidance surfaces, in particular for reducing turbulence and/or vortices, in particular for the axial fan or radial fan.

6. A transmission with cooling arrangement according to at least one of the preceding claims, **characterised in that** the fan wheel has a base body and fan vanes, in particular with a connecting ring and/or an air guidance ring being provided on the outer periphery of the fan wheel.

7. A transmission with cooling arrangement according to at least one of the preceding claims, **characterised in that** the fan wheel is connected to the shaft in a positive lock, in particular by means of a feather-key connection.

8. A transmission with cooling arrangement according to at least one of the preceding claims, **characterised in that** the shaft is an input shaft of the transmission.

9. A transmission with cooling arrangement according to at least one of the preceding claims, **characterised in that** the input gear stage is an angular gear stage, in particular with a bearing cover which projects out in a pot-like or cylinder-stub-like manner.

10. A transmission with cooling arrangement according to at least one of the preceding claims, **characterised in that** the fan is provided in encapsulated form, in particular an air deflection plate for deflecting the air in the axial direction is provided.

11. A drive, comprising a transmission driven by an electric motor which has a cooling arrangement according to at least one of the preceding claims.

## Revendications

1. Transmission avec un agencement de refroidissement,
dans laquelle un chapeau de palier (24) forme au moins partiellement un boîtier pour un palier d'un arbre (20),
dans laquelle un dissipateur de chaleur est prévu du côté du chapeau de palier (24) tourné vers l'environnement,
en particulier pou évacuer la chaleur générée par le palier et par une garniture étanche d'arbre éventuellement associée dans le milieu environnant, en particulier dans l'air,
une zone axiale de l'arbre étant recouverte aussi bien par le palier que par le dissipateur de chaleur,
le chapeau de palier recevant la bague extérieure du palier pour absorber la dérivation de couple résultant du frottement, et le chapeau de palier étant relié à une autre partie de boîtier de la transmission,
**caractérisée en ce que**
- (i) le dissipateur de chaleur présente un corps de base (2) auquel sont reliées des nervures (1) s'étendant radialement,
le corps de base étant monté sur la partie du chapeau de palier qui fait saillie en forme de pot de la partie de boîtier et étant relié au chapeau de palier par liaison de force, liaison de forme ou liaison de matière,
les ailettes (1) étant conformées à la manière d'ailettes qui sont enfichées comme des éventails dans le corps de base (2) et reliées à celui-ci par liaison de force, liaison de matière et/ou liaison de forme,
- (ii) ou le chapeau de palier présente un corps de base de forme appropriée sur lequel sont prévues des structures qui augmentent sa surface pour dissiper la chaleur sur le corps de base, comme des nervures de refroidissement, des doigts de refroidissement, des élévations et/ou des profils de surface ondulés.

2. Transmission avec un agencement de refroidissement selon au moins une des revendications précédentes,
**caractérisée en ce que**
la première partie de boîtier est un chapeau de palier, en particulier un chapeau de palier faisant saillie en forme de pot ou de cylindre tronqué vers l'environnement.

3. Transmission avec un agencement de refroidissement selon au moins une des revendications précédentes,
**caractérisée en ce que**
le dissipateur de chaleur présente une structure qui augmente sa surface, en particulier est réalisé d'une seule pièce.

4. Transmission avec un agencement de refroidissement selon au moins une des revendications précédentes,
**caractérisée en ce que**
une roue de ventilateur est reliée à l'arbre, en particulier pour former un ventilateur axial ou un ventilateur radial, en particulier la roue de ventilateur est réalisée sous la forme d'une roue de ventilateur radial ou d'une roue de ventilateur axial.

5. Transmission avec un agencement de refroidissement selon au moins une des revendications précédentes,
**caractérisée en ce que**
les éventails ou nervures forment des surfaces déflectrices d'air, en particulier pour réduire la turbulence et/ou le tourbillonnement, en particulier pour le ventilateur axial ou le ventilateur radial.

6. Transmission avec un agencement de refroidissement selon au moins une des revendications précédentes,
**caractérisée en ce que**
la roue de ventilateur présente un corps de base et des ailettes de ventilateur, une bague de liaison ou une bague déflectrice d'air étant en particulier prévue sur la circonférence extérieure de la roue de ventilateur.

7. Transmission avec un agencement de refroidissement selon au moins une des revendications précédentes,
**caractérisée en ce que**
la roue de ventilateur est reliée à l'arbre par liaison de forme, en particulier par clavetage.

8. Transmission avec un agencement de refroidissement selon au moins une des revendications précédentes,
**caractérisée en ce que**
l'arbre est un arbre d'entrée de la transmission.

9. Transmission avec un agencement de refroidissement selon au moins une des revendications précédentes,
**caractérisée en ce que**
l'étage d'entrée de la transmission est un étage de renvoi d'angle, en particulier avec chapeau de palier faisant saillie en forme de pot ou de cylindre tronqué.

10. Transmission avec un agencement de refroidissement selon au moins une des revendications précédentes,
**caractérisée en ce que**
le ventilateur est prévu encapsulé, en particulier un déflecteur d'air pour dévier l'air en direction axiale est prévu.

11. Entraînement, comprenant une transmission entraînée par un moteur électrique qui présente un agencement de refroidissement selon au moins une des revendications précédentes.
